# EUROPÄISCHE PATENTSCHRIFT

(11) **EP 2 422 099 B1**
(45) Veröffentlichungstag und Bekanntmachung des Hinweises auf die Patenterteilung: **31.07.2013**
(21) Anmeldenummer: 10721726.7
(22) Anmeldetag: 20.04.2010
(51) Int. Cl.: F16C 29/02, F16C 29/04, F16C 33/10, F16C 33/66

(54) **SCHMIERVORRICHTUNG UND VERFAHREN ZUR SCHMIERUNG EINER LINEARFÜHRUNG**
LUBRICATING DEVICE AND METHOD FOR LUBRICATING A LINEAR GUIDE
DISPOSITIF DE LUBRIFICATION ET PROCÉDÉ DE LUBRIFICATION D'UN GUIDE LINÉAIRE

(30) Priorität: 20.04.2009 DE 102009017833
(43) Veröffentlichungstag der Anmeldung: 29.02.2012
(73) Patentinhaber: Schunk Kohlenstofftechnik GmbH, 35452 Heuchelheim (DE)
(72) Erfinder: TABELLION, Jan, 35460 Staufenberg (DE)
(74) Vertreter: Tappe, Hartmut
(86) Internationale Anmeldenummer: PCT/EP2010/055219
(87) Internationale Veröffentlichungsnummer: WO 2010/122035

(56) Entgegenhaltungen:
- EP-A2- 0 275 080
- JP-A- 2005 207 497
- US-A- 5 145 262
- US-A1- 2003 099 414

## Beschreibung

Die Erfindung betrifft eine Schmiervorrichtung für eine Linearführung sowie ein Verfahren zur Schmierung einer Linearführung, gemäß dem Oberbegriff des Anspruchs 1 sowie des Anspruchs 7. Solche Vorrichtungen und Verfahren sind aus US 2003/0099414A bekannt.

Linearführungen bzw. Führungen mit einer translatorischen Bewegungsfunktion bedürfen regelmäßig einer Schmierung, das heißt, dass auf Gleitflächen oder Wälzflächen der Führung ein Schmierstoff appliziert werden muss. Aus dem Stand der Technik ist es bekannt dafür Festschmierstoffe zu verwenden, wobei die bekannten Festschmierstoffe als Partikel einem pastösen oder flüssigen Schmierstoff beigemischt sein können. Auch kann der Festschmierstoff in pulverisierter Form auf die Gleitflächen bzw. Wälzflächen appliziert werden. Weiter ist es bekannt, Kontaktflächen bzw. Gleitflächen oder Wälzflächen ausbildende Bauteile bzw. Führungseinrichtungen einer Linearführung mit derartigen Festschmierstoffen zu beschichten. Der Festschmierstoff kann dann in einer vergleichsweise dünnen Schicht auf einer Kontaktfläche aufgebracht sein. Auch kann der Festschmierstoff in ein Bauteil bzw. eine Kontaktfläche einer Führungseinrichtung eingelagert, eingebettet oder integriert sein. Beispielsweise kann die Führungseinrichtung eine poröse Oberfläche aufweisen, die den Festschmierstoff aufnimmt. Auch kann ein, eine Kontaktfläche ausbildendes Bauteil einer Führungseinrichtung aus einem Kunststoff ausgebildet sein, dem der Festschmierstoff beigemischt ist. Kennzeichnend für alle diese Bauteile ist, dass ein Volumen des Festschmierstoffs nur einen kleinen Teil des Gesamtvolumens bzw. des den Festschmierstoff beinhaltenden Bauteils beträgt.

Nachteilig bei den bekannten Schmiervorrichtungen ist, dass zusammen mit Verunreinigungen wie Staub oder Sand, stark abrasive Pasten gebildet werden. Auch ist der Aufwand zur Herstellung von Bauteilen von Führungseinrichtungen mit einer Festschmierstoffbeschichtung bzw. eingelagerten Festschmierstoffen relativ hoch.

Der vorliegenden Erfindung liegt daher die Aufgabe zugrunde, eine Schmiervorrichtung für eine Linearführung bzw. ein Verfahren zur Schmierung einer Linearführung vorzuschlagen, welche bzw. welches die vorgenannten Nachteile beseitigt.

Die Erfindung betrifft eine Schmiervorrichtung für eine Linearführung, nach Anspruch 1.

Demgemäß ist die Schmiervorrichtung von zumindest einem Festschmierstoffstück gebildet, welches mit einer Kontaktfläche, Wälzfläche oder Gleitfläche der Linearführung kontaktiert ist und bei einer Bewegung der Linearführung bzw. der Führungseinrichtungen eine ausreichende Trockenschmierung an bewegten Bauteilen ermöglicht. Der Einsatz eines monolithischen Festschmierstoffstücks erfordert demnach nicht eine besondere Behandlung von Bauteilen der Linearführung, beispielsweise durch Einlagerung von Schmierstoffpartikeln, so dass die Schmiervorrichtung auch in konventionellen Linearführungen verwendet werden kann. Die Herstellung einer Linearführung ist somit nicht durch die Ausbildung besonderer Bauteile mit Schmierfunktion erschwert. Auch stellt die Schmiervorrichtung eine Trockenschmierung zur Verfügung, so dass sich nicht die aus dem Stand der Technik bekannten abrasiven Pasten bilden können.

Vorteilhaft kann das Festschmierstoffstück an oder innerhalb einer als Führungsschlitten ausgebildeten Führungseinrichtung der Linearführung angeordnet sein. So kann das Festschmierstoffstück einer Relativbewegung des Führungsschlittens folgen und im Bereich der Kontaktflächenpaarung eine ausreichende Schmierung der Kontaktflächen sicherstellen.

Besonders vorteilhaft ist es, wenn das Festschmierstoffstück an einem Ende des Führungsschlittens angeordnet ist. Das Festschmierstoffstück kann dann beispielsweise in Art eines Abstreifers auf einer Kontaktfläche befindliche Verunreinigungen beseitigen bzw. abstreifen, und so verhindern, dass diese in dem Bereich der zu schmierenden Kontaktflächenpaarung gelangen.

Wenn die Führung eine Gleitführung ist, können die Kontaktflächen als Gleitflächen ausgebildet sein. Das Festschmierstoffstück kann dann unmittelbar mit einer der beiden Gleitflächen einer Gleitflächenpaarung kontaktiert sein.

Weiter kann das Festschmierstoffstück in einer Gleitfläche integriert sein. Beispielsweise kann innerhalb einer Gleitfläche eine Ausnehmung ausgebildet sein, die von dem Festsschmierstoffstück ausgefüllt wird. So kann eine unmittelbare Schmierung einer Gleitflächenpaarung sichergestellt werden.

Auch kann das Festschmierstoffstück eine Gleitfläche zumindest teilweise ausbilden. So kann die Gleitfläche einer Führungseinrichtung von dem Festschmierstoffstück und dem Material der Führungseinrichtung selbst gebildet werden. Das Festschmierstoffstück dient dann nicht alleine einer Schmierung, sondern hat auch eine statische Funktion für die Ausbildung der Führungseinrichtung.

Auch kann das Festschmierstoffstück unmittelbar mit den Wälzkörpern kontaktiert sein. Das heißt ein Schmierstoffauftrag erfolgt direkt auf die Kontaktflächen der Wälzköper, ohne dass ein Schmierstoffauftrag auf eine Kontaktfläche einer Führungseinrichtung notwendig ist. Jedoch ist es auch möglich, dass in einer Ausführungsform die Wälzkörper mit einem Schmierstoffstück und gleichzeitig eine Kontaktfläche einer Führungseinrichtung mit einem weiteren Schmierstoffstück kontaktiert ist. Je nach Bauart der Linearführung kann auch ein einzelnes Festschmierstoffstück Wälzkörper und Kontaktfläche der Führungseinrichtung gleichzeitig kontaktieren. Insgesamt ergibt sich so eine noch weiter verbesserte Schmierung der Linearführung.

Die Schmiervorrichtung kann besonders einfach in einer mit Wälzkörpern ausgebildeten Linearführung integriert werden, wenn das Festschmierstoffstück an einem Wälzkörperkäfig angeordnet ist. Das Festschmierstoffstück steht dann in einem unmittelbaren Kontakt mit den Wälzkörpern und/oder Kontaktflächen von Führungseinrichtungen. Auch kann der Wälzkörperkäfig selbst als ein Festschmierstoffstück ausgebildet sein.

In einer weiteren Ausführungsform kann das Festschmierstoffstück mit einer Kontaktfläche einer als Führungsschiene ausgebildeten Führungseinrichtung kontaktiert sein. Eine Führungsschiene einer Linearführung kann demnach unmittelbar mit dem Kontaktstück kontaktiert bzw. von diesem überstrichen und somit geschmiert werden.

Insofern ist es vorteilhaft, wenn das Festschmierstoffstück übereinstimmend mit einer Führungsbahn der Führungsschiene ausgebildet ist. So kann die Führungsbahn, welche eine Kontaktfläche für die Kontaktflächenpaarung ausbildet, vollständig vom dem Festschmierstoffstück mit einem Festschmierstoffauftrag versehen werden.

Wenn die Führungsschiene beispielsweise zwei Führungsbahnen aufweist, die gegenüberliegend an der Führungsschiene ausgebildet sind, ist es vorteilhaft, wenn das Festschmierstoffstück die Führungsschiene zumindest teilweise umgreift. Das Festschmierstoffstück kann dann beispielsweise im Wesentlichen U-förmig ausgebildet sein.

Weiter kann vorgesehen sein, dass die Schmiervorrichtung eine Andruckeinrichtung umfasst, die das Festschmierstoffstück an die Kontaktfläche presst. Die Andruckvorrichtung kann eine Feder umfassen, welche eine ausreichende Andruckkraft zur Verfügung stellt und so einen sicheren Kontakt des Festschmierstoffstücks an der Kontaktfläche sowie einen ausreichenden Schmierstoffauftrag gewährleistet.

Ebenso kann die Schmiervorrichtung ein Halteelement umfassen, an dem das Festschmierstoffstück angeordnet ist. Das Halteelement kann eine vereinfachte Montage des Festschmierstoffstücks an der Linearführung bzw. an einer Führungseinrichtung ermöglichen. Das Festschmierstoffstück kann als ein integraler Bestandteil des Halteelements ausgebildet sein. Alternativ kann das Halteelement in Art einer Halteeinrichtung ausgebildet sein, welche das Festschmierstoffstück als ein separates Bauteil an der Linearführung positioniert. Das Halteelement kann so ausgebildet sein, dass das Festschmierstoffstück einfach ausgewechselt werden kann.

In einer bevorzugten Ausführungsform kann das Festschmierstoffstück aus einem Graphitwerkstoff gebildet sein. Ein Graphit- bzw. Kohlenstoffwerkstoff eignet sich besonders zur Ausbildung eines Festschmierstoffsauftrags. Das Festschmierstoffstück kann dann kostengünstig mittels eines Pressverfahrens hergestellt werden.

Das erfindungsgemäße Verfahren nach Anspruch 7 zur Schmierung einer Linearführung wird mit einer Schmiervorrichtung ausgeführt, wobei die Linearführung aus zumindest zwei relativ zueinander bewegbaren Führungseinrichtungen gebildet ist, wobei von den Führungseinrichtungen zumindest eine Führung mit einer Kontaktflächenpaarung ausgebildet wird, wobei die Schmiervorrichtung zumindest ein Festschmierstoffstück umfasst, welches mit einer Kontaktfläche einer Führungseinrichtung kontaktiert wird.

Weitere vorteilhafte Ausführungsformen des Verfahrens ergeben sich aus den Merkmalsbeschreibungen der auf den Vorrichtungsanspruch 1 rückbezogenen Unteransprüche. Hinsichtlich der vorteilhaften Wirkungen des Verfahrens wird auf die vorstehenden Ausführungen zur Schmiervorrichtung verwiesen.

Im Folgenden wird die Erfindung unter Bezugnahme auf die beigefügte Zeichnung näher erläutert.

Es zeigen:
- **Fig. 1**: eine Vorderansicht einer Linearführung mit einer ersten Ausführungsform einer Schmiervorrichtung;
- **Fig. 2**: eine Draufsicht der Linearführung aus **Fig. 1** mit der Schmiervorrichtung;
- **Fig. 3**: eine Seitenansicht der Linearführung aus **Fig. 1** mit der Schmiervorrichtung;
- **Fig. 4**: eine Vorderansicht einer Linearführung mit einer zweiten Ausführungsform einer Schmiervorrichtung;
- **Fig. 5**: eine Draufsicht der Linearführung aus **Fig. 4** mit der zweiten Ausführungsform der Schmiervorrichtung;
- **Fig. 6**: eine Seitenansicht der Linearführung aus **Fig. 4** mit der zweiten Ausführungsform der Schmiervorrichtung;
- **Fig. 7**: eine perspektivische Schnittansicht einer Linearführung mit einer Schmiervorrichtung;
- **Fig. 8**: eine perspektivische Schnittansicht einer Linearführung mit einer Schmiervorrichtung.

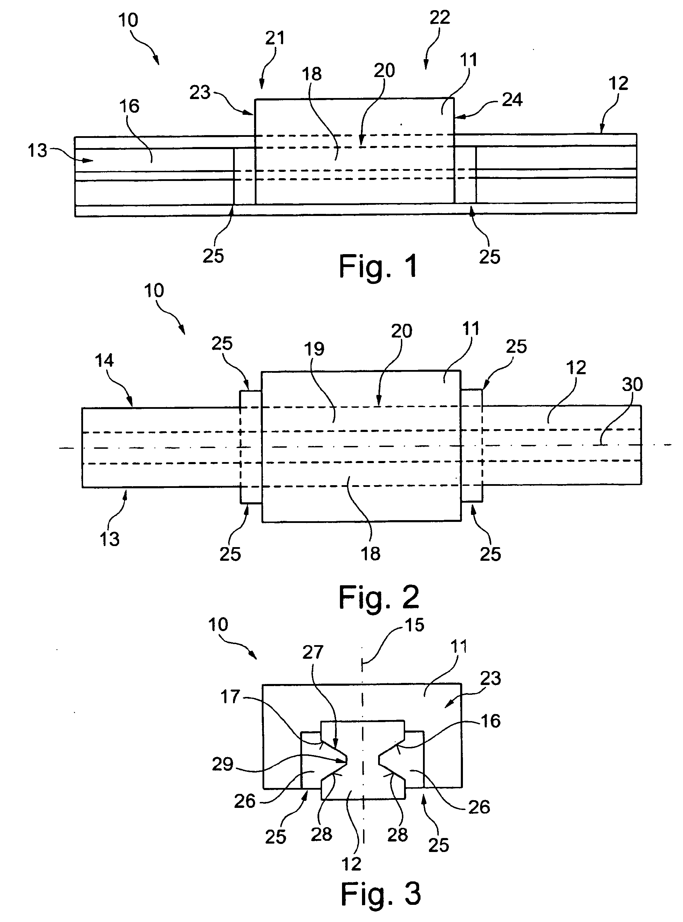

Eine Zusammenschau der **Fig. 1** bis **3** zeigt eine schematische Darstellung einer Linearführung 10, welche im Wesentlichen aus einem Führungsschlitten 11 und einer Führungsschiene 12 gebildet ist. Die Linearführung 10 ist achsensymmetrisch ausgebildet, so dass an der Führungsschiene 12 Führungsbahnen 13 und 14 der Führungsschiene 12 jeweils einander gegenüberliegend, relativ zu einer Symmetrieachse 15, ausgebildet sind. Die Führungsbahnen 13 und 14 bilden jeweils Kontaktflächen 16 bzw. 17 aus, welche zusammen mit hier nur verdeckt dargestellten Kontaktflächen 18 und 19 des Führungsschlittens 11 eine Kontaktflächenpaarung 20 ausbilden. Wie aus der Zeichnung nicht näher hervorgeht, sind im Bereich der Kontaktflächenpaarung 20 keine Wälzkörper vorgesehen, so dass es sich im vorliegenden Fall um eine Gleitführung handelt.

An jeweils Enden 21 und 22 des Führungsschlittens 11 sind an Stirnseiten 23 bzw. 24 des Führungsschlittens 11 identisch ausgebildete Schmiervorrichtungen 25 befestigt. Die Schmiervorrichtungen 25 sind aus einem Festschmierstoffstück 26 aus einem Graphitwerkstoff einstückig ausgebildet. Eine Kontur 27 einer Kontaktfläche 28 des Festschmierstoffstücks 26 ist dabei übereinstimmend mit einer Kontur 29 der Führungsbahnen 13 und 14 ausgebildet. Bei einer Relativbewegung des Führungsschlittens 11 entlang einer Längsachse 30 der Linearführung 10 zur Führungsschiene 12 bestreichen die Festschmierstoffstücke 26 jeweils die Kontaktflächen 16 und 17, wobei ein Auftrag von Festschmierstoff von den Festschmierstoffstücken 26 auf die Kontaktflächen 16 und 17 erfolgt. Der Festschmierstoff gelangt so in den Bereich der Kontaktflächenpaarung 20 und bewirkt eine Schmierung der Linearführung 10. Auch wirken die Festschmierstoffstücke 26 in Art eines Abstreifers, so dass eventuell auf den Kontaktflächen 16 und 17 befindliche Verunreinigungen nicht in den Bereich der Kontaktflächenpaarung 20 gelangen können.

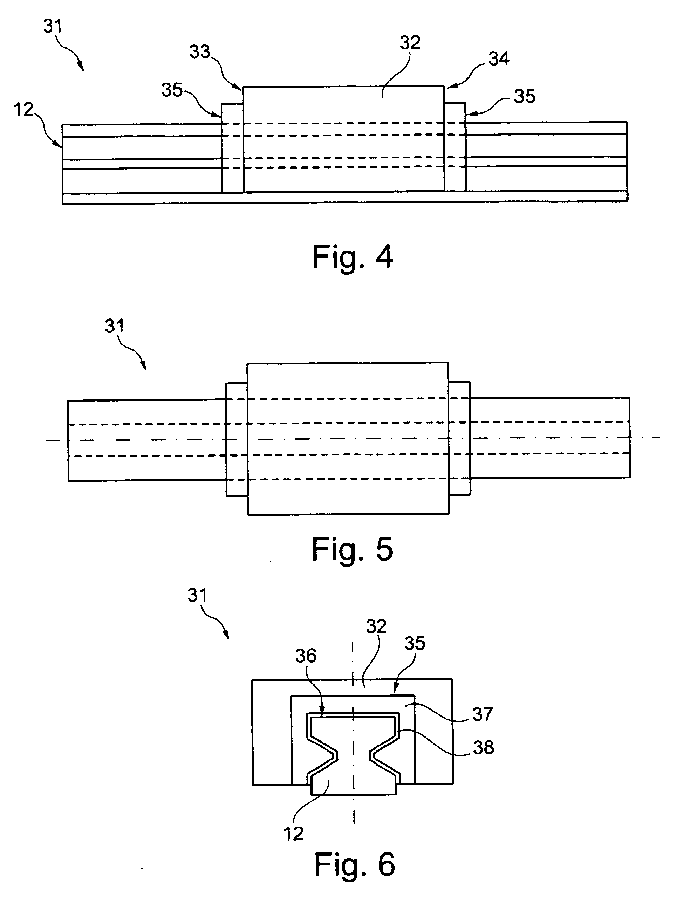

Eine Zusammenschau der **Fig. 4** bis **6** zeigt eine Linearführung 31, welche im Wesentlichen aus der in den **Fig. 1** bis **3** gezeigten Führungsschiene 12 und einem Führungsschlitten 32 gebildet ist. Im Unterschied zu der zuvor dargestellten Linearführung weist der Führungsschlitten 32 hier nicht näher ersichtliche Wälzkörper auf. Es handelt sich daher bei der Linearführung 31 um eine Wälzführung. An Stirnseiten 33 und 34 des Führungsschlittens 32 ist jeweils eine Schmiervorrichtung 35 befestigt, welche die Führungsschiene 12 um eine Oberseite 36 herum umgreift. Die Schmiervorrichtung 35 ist hier aus einem Halteelement 37, welches integral mit einem Festschmierstoffstück 38 verbunden ist, gebildet. Das Festschmierstoffstück 38 ist in das Halteelement 37 eingesetzt und wird von diesem an den jeweiligen Stirnseiten 33 bzw. 34 gehaltert. In einer hier nicht näher dargestellten Ausführungsform ist das Festschmierstoffstück mehrteilig ausgebildet, das heißt aus mehreren Teilstücken zusammengesetzt.

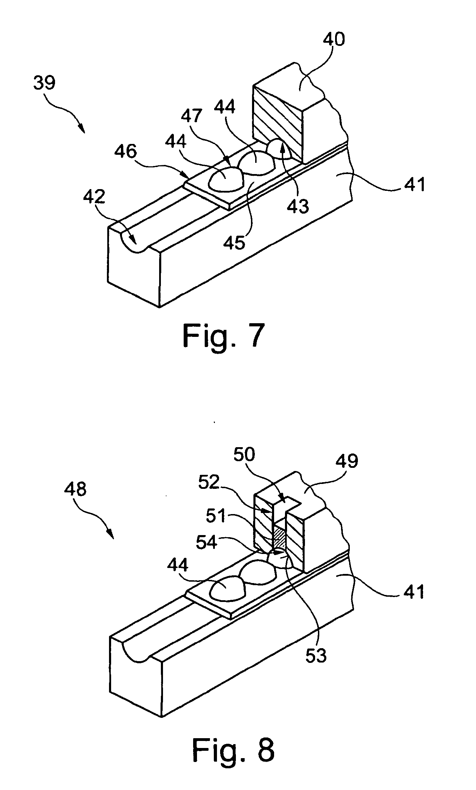

**Fig. 7** zeigt eine Linearführung 39 in einer perspektivischen Schnittansicht, gebildet aus als Profilschienen 40 und 41 ausgebildeten Führungseinrichtungen mit jeweils Führungsbahnen 42 bzw. 43, aus als Kugeln 44 ausgebildeten Wälzkörpern und mit einem Wälzkörperkäfig 45. Der Wälzkörperkäfig 45 ist seinerseits als eine Schmiervorrichtung 46 ausgebildet und ist mit jeweils einer Kontaktfläche 47 der Kugeln 44 kontaktiert. In einer hier nicht dargestellten Ausführungsform kann der Wälzkörperkäfig aus einem Kunststoffmaterial bestehen, an dem Festschmierstoffstücke angeordnet sind.

**Fig. 8** zeigt eine Linearführung 48, die im Unterschied zu der in **Fig. 7** dargestellten Linearführung eine Profilschiene 49 mit einer Ausnehmung 50 aufweist. In die Ausnehmung 50 ist ein Festschmierstoffstück 51 einer Schmiervorrichtung 52 eingesetzt, welches eine Kontaktfläche 53 einer Führungsbahn 54 der Profilschiene 49 ausbildet. Das Festschmierstoffstück 51 weist eine Länge auf, die größer ist als ein Achsabstand zweier Kugeln 44, so dass zumindest immer eine Kugel 44 mit dem Festschmierstoffstück 51 kontaktiert ist. Weiter ist eine hier nicht näher dargestellte Andruckeinrichtung vorgesehen, die das Festschmierstoffstück 51 gegen die Kugeln 44 presst.

## Patentansprüche

1. Schmiervorrichtung (25, 35) für eine Linearführung (10), wobei die Linearführung aus zumindest zwei relativ zueinander bewegbaren Führungseinrichtungen gebildet ist, wobei die Führungseinrichtungen ein Führungsschlitten (11) und eine Führungsschiene (12) sind, wobei von dem Führungsschlitten und der Führungsschiene zumindest eine Führung mit einer Kontaktflächenpaarung (20) ausgebildet wird, wobei die Führung eine Gleitführung ist, wobei Kontaktflächen (16, 17, 18, 19) der Kontaktflächenpaarung als Gleitflächen ausgebildet sind, wobei die Schmiervorrichtung zumindest ein Schmierstoffstück umfasst, wobei das Schmierstoffstück der Schmiervorrichtung ein Festschmierstoffstück (26, 38) ist, wobei das Festschmierstoffstück mit der Kontaktfläche (16, 17) der Führungsschiene (12) kontaktiert ist, wobei das Festschmierstoffstück an dem Führungsschlitten (11) angeordnet ist, **dadurch gekennzeichnet, dass** das Festschmierstoffstück an einem Ende (21, 22) des Führungsschlittens an einer Stirnseite (23, 24) des Führungsschlittens angeordnet ist.

2. Schmiervorrichtung nach Anspruch 1,
**dadurch gekennzeichnet,**
**dass** das Festschmierstoffstück (26) übereinstimmend mit einer Führungsbahn (13, 14) der Führungsschiene (12) ausgebildet ist.

3. Schmiervorrichtung nach Anspruch 1 oder 2,
**dadurch gekennzeichnet,**
**dass** das Festschmierstoffstück (38) die Führungsschiene (12) zumindest teilweise umgreift.

4. Schmiervorrichtung nach einem der vorangehenden Ansprüche,
**dadurch gekennzeichnet,**
**dass** die Schmiervorrichtung (25, 35) eine Andruckeinrichtung umfasst, die das Festschmierstoffstück (26, 38) an die Kontaktfläche (16, 17) presst.

5. Schmiervorrichtung nach einem der vorangehenden Ansprüche,
dadurch **gekennzeiehnet**,
dass die Schmiervorrichtung (35) ein Haltelement (37) umfasst, an dem das Festschmierstoffstück (38) angeordnet ist.

6. Schmiervorrichtung nach einem der vorangehenden Ansprüche,
**dadurch gekennzeichnet,**
**dass** das Festschmierstoffstück (26, 38) aus einem Graphitwerkstoff gebildet ist.

7. Verfahren zur Schmierung einer Linearführung (10, 31), mit einer Schmiervorrichtung (25, 35), wobei die Linearführung aus zumindest zwei relativ zueinander bewegbaren Führungseinrichtungen gebildet ist, wobei die Führungseinrichtungen ein Führungsschlitten (11) und eine Führungsschiene (12) sind, wobei von dem Führungsschlitten und der Führungsschiene zumindest eine Führung mit einer Kontaktflächenpaarung (20) ausgebildet wird, wobei die Führung eine Gleitführung ist, wobei Kontaktflächen (16, 17, 18, 19) der Kontaktflächenpaarung als Gleitflächen ausgebildet sind, wobei die Schmiervorrichtung zumindest ein Schmierstoffstück umfasst, wobei das Schmierstoffstück der Schmiervorrichtung ein Festschmierstoffstück (26, 38) ist, wobei das Festschmierstoffstück mit der Kontaktfläche (16, 17) der Führungsschiene (12) kontaktiert wird, wobei das Festschmierstoffstück an dem Führungsschlitten (11) angeordnet wird, **dadurch gekennzeichnet, dass** das Festschmierstoffstück an einem Ende (21, 22) des Führungsschlittens an einer Stirnseite (23, 24) des Führungsschlittens angeordnet wird.

## Claims

1. A lubricating device (25, 35) for a linear guide (10), the linear guide being composed of at least two guiding devices which can be moved relative to each other, the guiding devices being a guide slide (11) and a guide rail (12), wherein guides having contact surface pairings (20) are formed by the guide slide and the guide rail, the guide being a sliding guide, wherein contact surfaces (16, 17, 18, 19) of the contact surface pairing are formed as sliding surfaces, the lubricating device comprising at least one lubricant piece, the lubricant piece of the lubricating device being a solid lubricant piece (26, 38), the solid lubricant piece being contacted to the contact surface (16, 17) of the guide rail (12), the solid lubricant piece being arranged on the guide slide (11),
**characterized in that**
the solid lubricant piece is arranged at one end (21, 22) of the guide slide on a front side (23, 24) of the guide slide.

2. The lubricating device according to claim 1,
**characterized in that**
the solid lubricant piece (26) is formed in correspondence to a guide track (13, 14) of the guide rail (12).

3. The lubricating device according to claim 1 or 2,
**characterized in that**
the solid lubricant piece (38) at least partially surrounds the guide rail (12).

4. The lubricating device according to any of the preceding claims,
**characterized in that**
the lubricating device (25, 35) comprises a pressure device, which presses the solid lubricant piece (26, 38) against the contact surface (16, 17).

5. The lubricating device according to any of the preceding claims,
**characterized in that**
the lubricating device (35) comprises a holding element (37), on which the solid lubricant piece (38) is arranged.

6. The lubricating device according to any of the preceding claims,
**characterized in that**
the solid lubricant piece (26, 38) is made of a graphite material.

7. A method for lubricating a linear guide (10, 31), comprising a lubricating device (25, 35), the linear guide being composed of at least two guiding devices which can be moved relative to each other, the guiding devices being a guide slide (11) and a guide rail (12), wherein guides having contact surface pairings (20) are formed by the guide slide and the guide rail, the guide being a sliding guide, wherein contact surfaces (16, 17, 18, 19) of the contact surface pairing are formed as sliding surfaces, the lubricating device comprising at least one lubricant piece, the lubricant piece of the lubricating device being a solid lubricant piece (26, 38), the solid lubricant piece being contacted to the contact surface (16, 17) of the guide rail (12), the solid lubricant piece being arranged on the guide slide (11),
**characterized in that**
the solid lubricant piece is arranged at one end (21, 22) of the guide slide on a front side (23, 24) of the guide slide.

## Revendications

1. Dispositif de lubrification (25, 35) pour un guidage linéaire (10), le guidage linéaire étant composé d'au moins deux dispositifs de guidage étant mobile l'un par rapport à l'autre, les dispositifs de guidage étant un chariot de guidage (11) et une glissière (12), des guidages avec des paires de surfaces de glissement (20) étant formés par le chariot de guidage et la glissière, le guidage étant un guidage de glissement, des surfaces de contact (16, 17, 18, 19) de la paire de surfaces de glissement étant formées comme surfaces de glissement, le dispositif de lubrification comprenant au moins une pièce de lubrifiant, la pièce de lubrifiant du dispositif de lubrification étant une pièce de lubrifiant solide (26, 38), la pièce de lubrifiant solide étant reliée à la surface de contact (16, 17) de la glissière (12), la pièce de lubrifiant solide étant agencée sur le chariot de guidage (11),
**caractérisé en ce que**
la pièce de lubrifiant solide est agencée à une extrémité (21, 22) du chariot de guidage d'un côté frontal (23, 24) du chariot de guidage.

2. Dispositif de lubrification selon la revendication 1,
**caractérisé en ce que**
la pièce de lubrifiant solide (26) est formée correspondant à une voie de guidage (13, 14) de la glissière (12).

3. Dispositif de lubrification selon les revendications 1 ou 2,
**caractérisé en ce que**
la pièce de lubrifiant solide (38) entoure au moins partiellement la glissière (12).

4. Dispositif de lubrification selon l'une quelconque des revendications précédentes,
**caractérisé en ce que**
le dispositif de lubrification (25, 35) comprend un dispositif de pression qui presse la pièce de lubrification solide (26, 38) contre la surface de contact (16, 17).

5. Dispositif de lubrification selon l'une quelconque des revendications précédentes,
**caractérisé en ce que**
le dispositif de lubrification (35) comprend un élément de retenue (37) sur lequel la pièce de lubrifiant solide (38) est agencée.

6. Dispositif de lubrification selon l'une quelconque des revendications précédentes,
**caractérisé en ce que**
la pièce de lubrifiant solide (26, 38) est formée d'un matériau en graphite.

7. Procédé de lubrification d'un guidage linéaire (10, 31), comprenant un dispositif de lubrification (25, 35), le guidage linéaire étant composé d'au moins deux dispositifs de guidage étant mobile l'un par rapport à l'autre, les dispositifs de guidage étant un chariot de guidage (11) et une glissière (12), des guidages avec des paires de surfaces de glissement (20) étant formés par le chariot de guidage et la glissière, le guidage étant un guidage de glissement, des surfaces de contact (16, 17, 18, 19) de la paire de surfaces de glissement étant formées comme surfaces de glissement, le dispositif de lubrification comprenant au moins une pièce de lubrifiant, la pièce de lubrifiant du dispositif de lubrification étant une pièce de lubrifiant solide (26, 38), la pièce de lubrifiant solide étant reliée à la surface de contact (16, 17) de la glissière (12), la pièce de lubrifiant solide étant agencée sur le chariot de guidage (11),
**caractérisé en ce que**
la pièce de lubrifiant solide est agencée à une extrémité (21, 22) du chariot de guidage d'un côté frontal (23, 24) du chariot de guidage.
